# EUROPEAN PATENT SPECIFICATION

(11) **EP 0 562 317 B1**
(45) Date of publication and mention of the grant of the patent: **18.09.1996**
(21) Application number: 93103423.5
(22) Date of filing: 03.03.1993
(51) Int. Cl.: A01K 63/04

(54) **Percolation type aquarium filter**
Perkolationsaquarienfilter
Filtre pour aquarium par percolation

(30) Priority: 06.03.1992 IT MI920214 U; 11.02.1993 IT MI930108 U
(43) Date of publication of application: 29.09.1993
(73) Proprietor: Chatzimanolis, Ercole, I-40122 Bologna (IT)
(72) Inventor: Chatzimanolis, Ercole, I-40122 Bologna (IT)
(74) Representative: La Ciura, Salvatore

(56) References cited:
- EP-A- 0 384 321
- US-A- 4 684 462
- US-A- 4 851 112
- US-A- 4 892 651

## Description

The present invention proposes a percolation type filter for aquariums, by means of which are forseen a guarantee of a constant flow of water over the filtering material and a compensation for variations of the water level, the latter of which generally causes malfunction of, or damage to, the filtering system. Such a filter is known for example from EP-A-0,384,321.

As is known with regard to all aquariums, domestic or otherwise, to secure the optimum environmental conditions required for the maintenance and development of fish and/or plant life, it is essential, among other things, to keep the water in the tank as clean as possible, eliminating from it all impure dish and plant products as well as matter resulting from residues of unconsumed food or from algae or other products of spontaneous sources.

To this end, biological percolation filters are commonly utilized, which go beyond traditional filtration systems ( for example, mechanical filters) and which eliminate, via the biological action of aerobic bacteria, the major part of the abovesaid impurities.

In percolation filters, the filtering material, on the surface of which the biomass (the aerobic bacteria) is developed, must be constantly wetted by the water but it never has to be immersed in it; therefore, this material is normally positioned in a compartment at the edge of the tank in a raised position with respect to the bottom and in such a manner that water from the tank overflows into the said compartment, flowing over the biomass to subsequently gather at the bottom of the said compartment, from where it is drawn, correctly filtered, by a pump and re-emitted into the tank.

However, this system is compromised by the eventuality of variations in the volume of water present in the tank, with consequent variations in the water level, which produce undesirable effects in the functioning of the filtering system in so far as:
- a decrease in the water level, caused by the natural evaporation of the liquid in domestic temperatures and under the aquarium lamp, produces long breaks in the overflow of water from the tank into the filtering compartment, interruptions which in a short time provoke a progressive drying of the filtering mass which thus irrevocably loses its biofiltering porperties due to the rapid death of the bacteria.
- an increase in the volume of water in the tank due to an excessive refilling may cause an excessive overflow of liquid from the tank into the compartment containing the filtering biomass. If this overflow is excessive, it accumulates and reaches the level below the filtering material which thus becomes partially or totally immersed and is thus dammaged.

These inconveniences are eliminated by a filter prespecified in compliance with the demands. According to an earlier version, a filter is seen to include:
- a primary compartment communicating with the aquarium tank via appropriately positioned apertures in the lower part of the wall which separates such a compartment from the aquarium tank;
- a secondary compartment communicating with the said tank via an overfall orifice ( or, at any rate, an opportune passage);

These first and second compartments communicate between each other by means of a regulatable overflow orifice and the filter thus designed includes furthermore a float, positioned in the second compartment under the filtering mass which measures the level of filtered water and directly controls, by means of a rod which traverses the separating wall of the two compartments the influx of water from the aquarium into the primary compartment.

Furthermore, a suction pump is furnished, for the reintake of the filtered water present in the secondary compartment, which is positioned in the primary compartment, which communicates with the secondary via an appropriately placed apperture, and which draws in the aforesaid water and sends it, via a common pipeline, into the aquarium tank.

The invention will now be described with reference to the attached figures in which:
- figure 1 is a schematic view from above of the perfected filter in compliance with the invention, positioned inside the aquarium;
- figure 2 represents a frontal view of the filter in compliance with the invention herein outlined, along the sect on A-A as seen in figure 1;
- figure 3 represents a frontal view of the filter in compliance with the invention herein outlined, along the section B-B as seen in figure 1;
- figure 4 represents a view in section of a further, prefered version of toe aquarium in compliance with the invention;
- figure 5 is a schematic, perspective view of a different version of the filter in compliance with the invention:
- figures 6 and 7 are schematic, vertical sections of the filter shown in figure 5;
- figure 8 is a schematic section of a compartment of the filter coupled to the refill tank;
- figure 9 is a schematic view of the filter shown in figure 5 with the connections indicated for provisioning for reserve water.

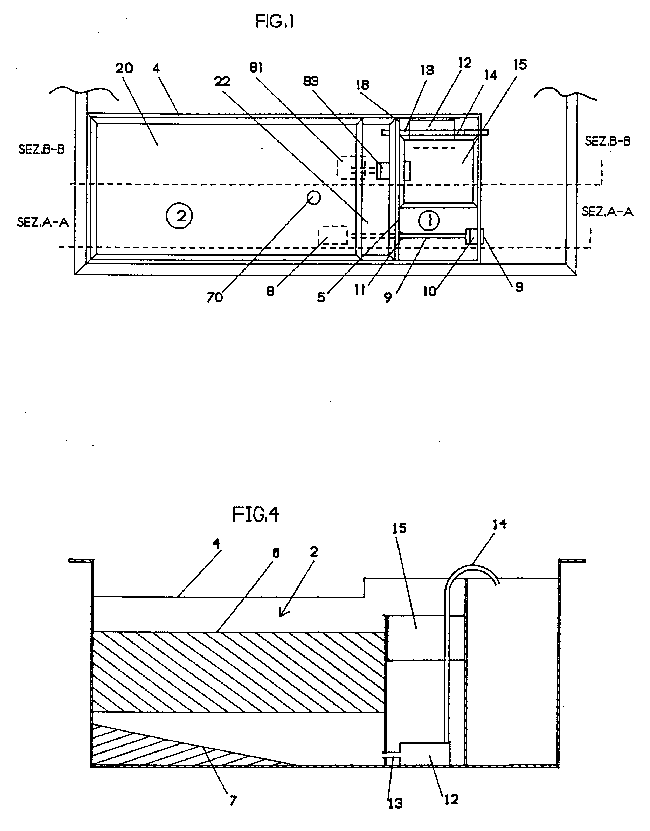

With reference to figure 1, the filter perfected in compliance with the invention includes a compartment 1 communicating with the aquarium tank via apertures 3 positioned in the lower part of the wall which seperates said compartment from the aquarium tank, and a compartment 2 which communicates with the aquarium via an overfall orifice 4, and with compartment 1 via an overfall orifice 5 (or via another suitable passage), said overfall orifice 5 being positioned at a height below that of overfall orifice 4.

In compartment 2 a modular and extractable container 20 is positioned such that it is suspended from the bottom of said compartment; preferably the container 20 provides four platforms 21, 22, 23 and 24 in horizontal positions and each bearing a series of suitable perforations/slits of an appropriate quantity and dimension to guarantee a correct penetrability to water such that they act simultaneously to physically circumscribe the filtering material contained between them, material which is not compact but which is composed of parts of dimensions superior to those of the aforesaid perforations/slits.

Between platforms 21 and 22 a first quantity of filtering material 30 is positioned, sufficient to ensure a correct biological filtration of the water coming from the overfall orifice 4; between floors 22 and 23 a second quantity of filtering material 40, equal to or different from 30, which ensures the correct biological filtration of the water coming from the overfall orifice, like that coming from the perforations in platform 22.

Between platforms 23 and 24 there is an interstice designed to accomodate a filtering septum 50 which can be substituted via a slit found in the lateral wall of the container 20, said septum ensuring a correct mechanical filtration of the water coming from the upper levels and retaining those impurities which are formed in them.

The aforesaid platforms 21, 22, 23 and 24, which can be of different numbers as required, can, if necessary, be covered with a thin layer of filtering cloth, which can be chanced periodically and which also acts to ensure a further mechanical filtration of the water crossing said platforms.

Finally, the container 20 exhibits a lower, inclined platform 25, designed to gather the little drops of filtered water coming from the upper levels and to convey them uniformly to the bottom of the container 2.

In compartment 2, under platform 25 of container 20, there is a float 8 attached to a rod 9 which acts on a valve 10 to regulate the influx of water through the apertures 3, that is, the intake of water from the aquarium to compartment 1.

A flexible membrane 11 permits the rod 9 to oscillate while impeding, however, the passage of water from compartment 1 to compartment 2 and vice versa.

In compartment 1, flanking the rod 9-valve 10 group, there are one or more pumps 12, that, via a tube 13 crossing the wail 18, collects the filtered water present at the bottom of compartment 2 and sends it back to the aquarium via tube 14.

In compliance with the invention, the filter allows for an optimisation of the flow of water in the filtering materials 30, 40, 50 in as much as the float 8 regulates the influx of water from the aquarium into compartment 1 based on the level of filtered water present at the bottom of compartment 2. In the case of an excessive amount of water present in the aquarium ( as in the case of periodic refills ), with water exceeding overfall orifice 4, between the aquarium and compartment 2 and passing subsequently into the filtering materials 30, 40 and 50, onto platform 25 and then onto the floor of compartment 2, with the level rising progressively, the float 8, by means of rod 9, commands valve 10 to close the apertures 3. The flow of water from orifice 5 is thus arrested, resulting in the regulation of the final amount of water entering container 20 and thus compartment 2, and curtailing, in short, any excess of filtered water at the bottom of compartment 2. In this way the immersion of the filtering materials in liquid, even if only partial, is avoided.

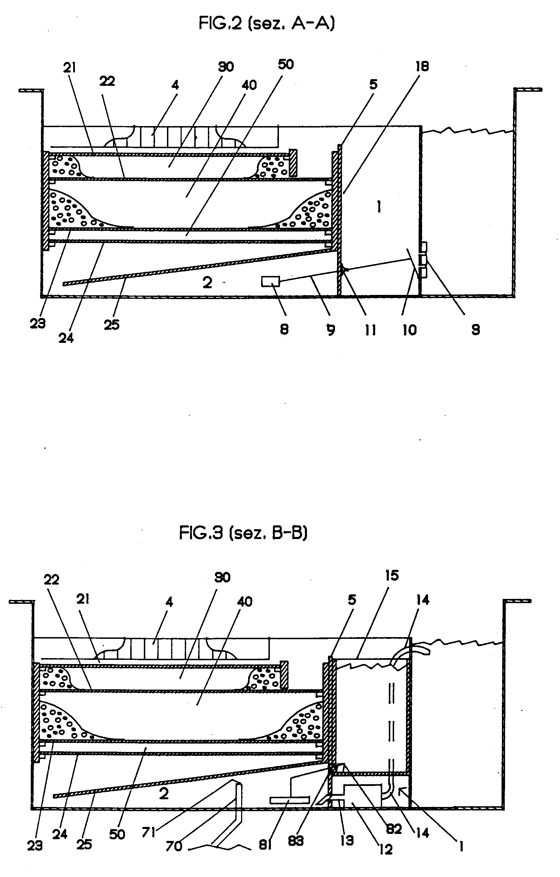

With reference to figure 3, a tube, which is open at the top, is envisaged coming out of the bottom or from one of the lateral walls of the filter-tank connecting the inside of compartment 2 with the outside.

Since the aperture 71 of the tube 70 gathers at a height above the level of the maximum reach of the float 8, in the event that aquarium water reaches an excessive total volume, spilling across overfall orifice 4 and the filtering materials 30, 40 and 50 at the bottom of compartment 2, also reaching an excessive level here, before the said level grows so much as to lap the filtering material 50, the excess water is unloaded via tube 70.

When the volume of water in the aquarium is decreased by spontaneous evaporation such that it fails to cause the flow of water from overfall orifice 4, the level of water present at the bottom of compartment 2 will also soon decrease ( the pump 12 functions constantly).

Before this causes a compromising desiccation of the filtering materials 30, 40 and 50, the float 8 lowers itself opening, by means of rod 9, the valve 10 and consequently increases the flow of water from the apertures 3 in compartment 1. The water in said compartment 1 soon exceeds the level of overfall orifice 5 and ends up distributed on floor 22, passing through the perforations present therein, and so passing to wet the filtering material 30, thus maintaining the water in compartment 2 at a constant level.

In accordance with an advantageous embodiment illustrated in figure 3, a basin 15 is furthermore envisaged, inserted in compartment 1, containing water and provided below with a valve system, controlled by a float situated in compartment 2.

The float 81 operates on the level of the water present at the bottom of compartment 2 but at a level considerably below that of the float 8. When the level of filtered water present at the bottom of compartment 2 lowers, for example because of a decrease in the overall volume of water present in the aquarium, to such an extent as to bring the level of said water below the overfall orifice 5, the float 81 activates the valve 82 positioned in the basin 15, allowing the water contained in it to flow, via the apertures 83, towards the bottom of the aforesaid compartment 2.

In this way the refill water contained in the basin 15 is automatically taken into circulation, thus compensating for spontaneous decreases of aquarium water and ensuring that the pump never turns in vacuum conditions ( a situation which would cause overheating and/or breakage of the pump).

If however the basin 15 is positioned on the outside of the aquarium, a siphon is furnished, attached, by means of a "Venturi" apparatus, to the reintake tube 14, in which there is always a flow of water.

The siphon, controlled by a device which measures the level of water in the aquarium, for example a float system, ensures that the water refill brings the total level of the aquarium above the identified emergency level ( the level below overfall orifice 5).

In this case the float opens the siphon which, primed by the "Venturi" apparatus on tube 14, takes in the water present in the basin 15, passing it back into the aquarium until the optimal level for the correct functioning of the filter is reached.

In other cases such a refill can be effected by different means, as for example via a system in which a floating electrical switch which commands a pump connected to the refill container. Said floating electrical switch is positioned at the bottom of compartment 2 and, in the case of an excessive decrease of water in said bottom, the change in the vertical position of the said switch activates the pump to which it is attached which begins to put the water from the basin 15 back into circulation via suitable conduits.

It will also be possible to endow the filter with noted solutions such as carbon dioxide diffusers to control the pH of the water, and diffusers/proportioning devices for fertilising or nutritive substances.

It is furthermore possible to furnish the filter with coupling systems and with systems for the intake/emission of water from the filter to the aquarium and vice versa, in such a way as to achieve an external filtering unit which can be separated from the body of the aquarium; in this case the apertures 3 and the overfall orifice 4 are absent whilst the water intake into compartment 1 of the filter by the above mentioned suitable means, as for example by a siphon, itself connected to the tube 14 by means of a "Venturi" apparatus, on the extremity of which will be positioned a floating valve controlled by the level present in compartment 1.

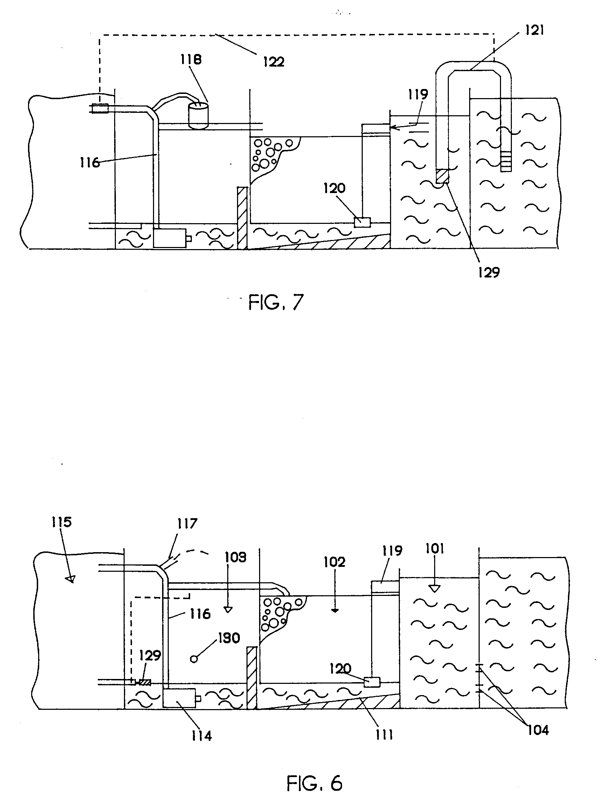

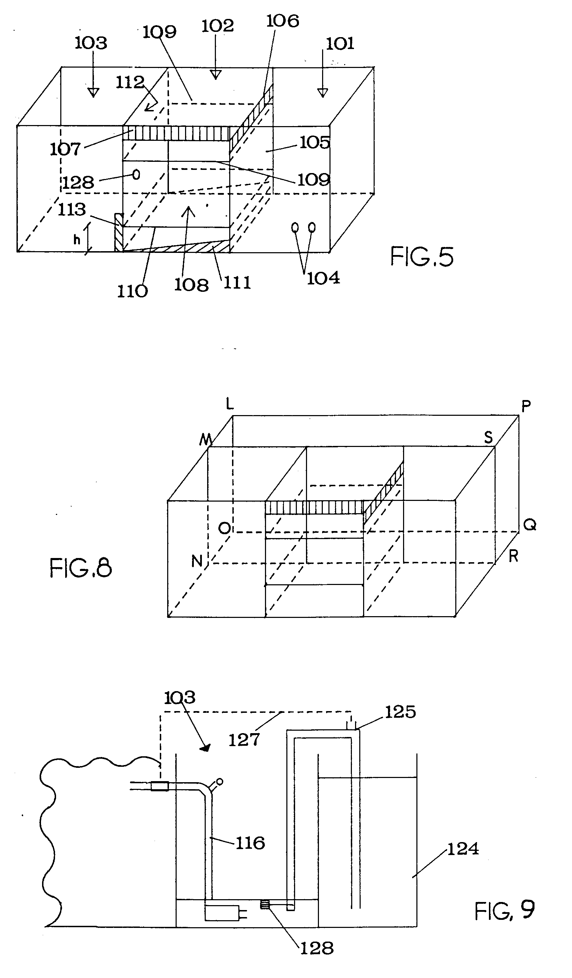

Figures 5 to 8 illustrate a further, prefered version of the invention, in which is furnished a container subdivided in three compartments respectively labelled with the numbers 101, 102 and 103.

Compartment 101 communicates with the tank via one or more perforations 104 positioned near the bottom of the separating wall and thus permitting water from the bottom of the tank to enter the compartment.

On wall 105 which separates compartments 101 and 102 there is a regulatable overfall orifice provided with a grill or comb 106.

Consequently the water present in compartment 101 can pass into compartment 102 via this overfall orifice.

Compartment 102 is provided in its turn, in the wall contacting with the tank, with a second overfall orifice provided with a grill or comb 107, this also preferably at a regulatable height.

In compartment 102 there is a percolation filter made of filtering materials indicated by 108 and circumscribed above and below by perforated walls 109 and 110.

The lower wall 110 is raised by a certain amount with respect to the bottom of the aquarium and below it there is positioned an inclined wall 111.

Compartment 102 is separated from compartment 103 by a wall 112 the lower side of which is at a distance h from the bottom of the tank, thus permitting the water present in compartment 102 to pass into compartment 103.

A leaf filter or similar is positioned in the area seperating these to compartments. Compartments 102 and 103 being in communication, the level of water within them is equal.

In compartment 103 a pump is located which takes in water from the bottom and sends it back into circulation in the tank, indicated 115, along a sending pipe 116.

On the sending conduit 116 there is a branch 117 acting as the controller of a carbon dioxide diffuser 118, of the noted type, for the adjustment of water pH.

Furthermore, compartment 101 communicates with compartment 102 by means of an aperture 119, positioned at a height below the level reached by the water inside the compartment itself and closed by a valve of the noted type activated by a float 120 which registers the level of the water at the bottom of compartment 102.

When the level falls below a certain limit, the float opens the valve allowing the water present in compartment 101 to pass directly into compartment 102, even if the level in compartment 101 is below the elevation of the combs 106 and 107.

This apparatus serves, as will be described later, to compensate for possible differences between the capacity of the pump and the quantity of water which, at full load, enters compartment 102 instead via the combs 106 and 107.

Communication between the aquarium tank and the compartment 101 can also occur, instead of via the perforations 104, by means of a siphon 121 or a similar device, as illustrated in figure 7, which can also be connected in branch with the pipe/valve float system 119 and 120.

In this case the siphon apparatus will be connected to the pump's sending pipe 116 by means of a conduit 122 on which it is fitted with a "Venturi" apparatus, this arrangement allowing for the positioning of the filter outside the tank as well.

The depression created by the water which circulates in the pipe 116 will keep the siphon 121 constantly primed.

To replace the liquid lost in the tank due to evaporation of the water, this version of the filter furnishes a suitable reservoir 124 attached to compartment 103 by means of a siphon 125 which is always primed with water that runs in the pump's sending pipe 116, attached to the siphon via the conduit 127.

A level valve, for example a floating valve 128, is furnished in the lower part of the siphon to request a flow when the level in compartment 103 reaches the desired elevation. If the reservoir is attached to the filter, only a single pipe 123 furnished with a float 128 is utilised.

A perforation 130 is also foreseen in the wall 112 of compartment 103, suitably positioned and with an automatic device for the offloading of water of the type noted, designed to permit the periodic changing of the aquarium water.

Finally, also in compartment 103, a lower floating valve 129 can be foreseen, with an aim to make water flow directly into compartment 103 and simultaneously activating the partial recirculation on the percolation opening.

The functioning occurs as follows:

Once the capacity is regulated in such a way as to summarily equilibrate the pump capacity with the quantity of water which, via the overfall orifices 106 and 107, passes from the tank and from compartment 101 onto the percolation filter, the system conditions are stabilised so that the water circulates across the filter and gathers at the bottom of compartment 102, from where it will pass into compartment 103 after having crossed the leaf filter 113.

Here the water is removed by pump 114 and put back into the tank, and from here part of it passes into compartment 101 via the perforations 104 and part of it falls onto the percolation filter via the overfall orifice 107.

The sediment created by the biological action of the percolation filter is conveyed towards the leaf filter by the inclined wall 111.

Naturally in the case wherein the filter is positioned outside the tank, the perforations 101 are absent and the water reaches compartment 101 via the siphon 121.

As has been said already, the siphon 121 is kept constantly primed by the depression, created by the apparatus 121 fitted onto the conduit 116, in the branch 122 connected to the siphon 121.

In case the level in compartments 102 and 103 should fall, for any reason, to below the stable value, the clapè valve 120 opens the aperture 119 in response thus allowing the water present in compartment 101 to flow directly into compartment 102 without having to reach the level of the overfall orifices 106 and 107.

In this way one can be sure that the level in compartments 102 and 103 never falls to below the security value.

The siphon 125 functions in an analagous manner and as an alternative to the pipe which connects compartment 103 with the reservoir 124.

When the level of water in the aquarium decreases and consequently falls below the level of water in compartment 103, the floating valve 128 opens the siphon 125, which is kept constantly primed by the "Venturi" apparatus located on the pump's sending pipe, thus allowing the transfer of the amount of water necessary, from the reservoir 124 to the compartment, to restore the level.

An expert in the sector will then be able to allow for any further variations of the aforesaid perfected filter, such as when the pump is positioned outside the body of said filter or different forms of the filter, or broadenings or extensions of the filter itself which are designed to act as openings, containers, supports/props for the service equipment for the functioning of the aquarium (illumination, control and regulation of functions) which at any rate may be considered different forms of implementation of the solution idea itself.

Obviously these arrangements may vary as widely as the materials as a function of the practical demands of realisation, within the scope of protection afforded by the appended claims.

## Claims

1. Percolation type filter for aquariums, comprising two adjacent compartments (1,2) which communicate with each other by means of an overflow orifice (5), the first compartment (1) being adapted to communicate with an aquarium via a number of apertures (3) positioned in one of it's walls, characterised in that said second compartment (2) contains filtering material suspended from said second compartment bottom and that there are pump means located in said first compartment (1) for the gathering of filtered water from the bottom of the aforesaid second compartment (2) and said pump means are adapted for re-emitting said water into circulation into said communicating aquarium.

2. Filter according to claim 1, characterised by the fact of furnishing, in said second compartment, a container subdivided in further filtration zones, each being circumscribed by platforms furnished with passages for water, each of said zones containing filtering material, said container being placed at a certain height above the bottom of the compartment.

3. Filter according to the preceding claims, characterised by the fact that said means for the withdrawal of filtered water from the bottom of the said second compartment are composed of a group of pumps situated in the said first compartment, said group of pumps drawing water present at the bottom of the second compartment and emitting it back, via a conduit, into the aquarium tank.

4. Filter according to one or more of the preceding claims, characterised by the fact of furnishing a valve which regulates the influx of water from the aquarium tank into the said first compartment, being connected to one end of a rod to the other end of which is connected a float which rests at the bottom of the second compartment and which controls its opening and closing.

5. Filter according to claim 4, characterised by the fact of furnishing, in the separating wall between the said first and second compartments, an aperture designed to allow the movement of said rod and being furthermore furnished, in respect of said rod, with an elastic membrane fixed to said wall and to said rod, the membrane impeding the flop of water from the said aperture.

6. Filter according to claims 1 to 3, characterised by the fact that the two overfall orifices, positioned respectively between the aquarium and the second compartment and between the first and second compartments, are at different levels and, more precisely, the first is positioned at a level above the second.

7. Filter according to claims 1 to 4, characterised by the fact of furnishing a supplementary tub positioned in the first compartment containing refill water and designed to compensate for decreases in the quantity of water present in the aquarium, the tub being equipped with the means to measure the level of water present at the bottom of the second compartment and which open the flow of refill water from said tub into the aquarium.

8. Filter according to the preceding claims characterised by the fact of furnishing a pipe crossing the bottom/lateral wall of the filter and of the aquarium, placed in the second compartment under the aforesaid container, gathering at a level above that of the aforesaid floats and designed to guarantee the emission of any excess water from the said bottom of the second compartment.

9. Filter according to claim 4, characterised by the fact that the aforesaid modular and extractable container of filtering material consists of four parallel and horizontal platforms, furnished with suitable perforations/slits, said platforms defining a primary zone of containment for the biological-action filtering material, a second zone of containment for the biological-action filtering material and a third interstice designed to host a septum of mechanical-action filtering material, in addition to which an inclined platform is furnished at a lower level designed to gather the drops of water coming from the levels above it and to convey them reliably to the bottom of the aforesaid compartment 2.

10. Filter according to the preceding claims and characterised by the fact of furnishing the means to locate said filter to the outside of the aquarium tank.

11. Filter according to claim 7, characterised by the furnishing of the positioning of the aforesaid basin which contains the refill water onto the outside of the filter, said basin being furnished with suitable means to measure the the level of water present at the bottom of the aforesaid second compartment and to control suitable means to allow the emission into the aquarium of water contained within it.

12. Filter according to claims 1 to 7, characterised by the fact that the aforesaid septum of mechanical-action filtering material is extractable from the interstice persent in the aforesaid container by means of a suitable slit furnished in the lateral wall of the container itself.

13. Filter for aquariums according to claim 1, characterised by the fact of furnishing a third compartment communicating with the aforesaid second compartment via an aperture made to this end in the bottom, a pump for the recirculation of water being furnished in the third said compartment in addition to, between the said first and second compartments, the furnishing of means designed to favour the direct flow of water from the said first to the said second compartment, said means being controlled by a floating apparatus which works on the level of water present in the said second and third compartments.

14. Filter for aquariums according to claim 12, characterised by the fact that said means allow the direct flow of water from said first to the said second compartment consist of an aperture placed in the separating wall between said compartments and closed by a valve activated by said floating device.

15. Filter for aquariums according to claim 12, characterised by the fact that said means designed to favour the direct flow of water from the said first to the said second compartment consist of a siphon attached in branch to a valve controlled by a floating apparatus which works on the level of the said second compartment, said siphon being kept constantly primed by a "Venturi" apparatus positioned on the pump's sending pipe and connected via a branch with the said siphon.

16. Filter for aquariums according to the preceding claims, characterised by the fact of furnishing means designed to refill the level of water in the filter and in the basin, said means consisting of a siphon or, alternatively, of a pipe which connects said third compartment with a reservoir, said siphon being kept primed by a "Venturi" apparatus positioned on the pump's sending pipe and being controlled by a valve activated by a floating apparatus which works on the level of the said third compartment.

17. Filter for aquariums according to the preceding claims, characterised by the fact of furnishing, in the aforesaid third compartment, a branch-pipe connected to an automatic offloading apparatus to change the water.

18. Filter for aquariums according to the preceding requirements, characterised by the fact of furnishing the floor of the aforesaid second compartment inclined so as to favour the gathering of pollutant materials, a leaf filter being furnished and placed to this end at the communicating aperture between the said second and third compartments.

19. Filter for aquariums in compliance with the preceding claims, characterised by the fact of furnishing means designed to locate the said filter also on the outside of the tank.

20. Filter for aquariums according to the preceding claims, characterised by the fact that the capacity of the pump varies from 3 to 6 times the volume of the treatment water, with the volume of refill material from 3.5 to 10 times the volume to be treated.

## Patentansprüche

1. Perkolationsfilter für Aquarien, umfassend zwei benachbarte Abteilungen (1, 2), die miteinander über einen Überlauf (5) in Verbindung stehen, wobei die erste Abteilung (1) dazu dient, mit einem Aquarium über eine Anzahl von Öffnungen (3) in Verbindung zu stehen, die in einer von dessen Wänden angeordnet sind,
**dadurch gekennzeichnet**,
daß die zweite Abteilung (2) Filtermaterial enthält, das am Boden der zweiten Abteilung angebracht ist, daß in der ersten Abteilung (1) eine Pumpeinrichtung angeordnet ist, um gefiltertes Wasser vom Boden der zweiten Abteilung (2) abzuziehen, und daß diese Pumpeinrichtung dazu dient, das Wasser wieder in die Zirkulation im damit in Verbindung stehenden Aquarium zurückzuführen.

2. Filter nach Anspruch 1, dadurch gekennzeichnet,
daß in der zweiten Abteilung ein Behälter in weitere Filtrationszonen unterteilt ist, wobei jede von Platten mit Durchlässen für Wasser umgeben ist und jede dieser Zonen Filtermaterial enthält, wobei ferner der Behälter in einer gewissen Höhe über dem Boden der Abteilung angeordnet ist.

3. Filter nach den vorhergehenden Ansprüchen, dadurch gekennzeichnet, daß die Einrichtung zum Abziehen von gefiltertem Wasser vom Boden der zweiten Abteilung aus einer Gruppe von Pumpen zusammengesetzt ist, die in der ersten Abteilung angeordnet sind, wobei diese Gruppe von Pumpen Wasser vom Boden der zweiten Abteilung abzieht und zurück über eine Leitung in den Aquariumbehälter führt.

4. Filter nach einem oder mehreren der vorhergehenden Ansprüche, dadurch gekennzeichnet, daß ein Ventil vorgesehen ist, das den Zustrom von Wasser aus dem Aquariumbehälter in die erste Abteilung steuert und mit einem Ende einer Stange verbunden ist, deren anderes Ende mit einem Schwimmer verbunden ist, der auf dem Boden der zweiten Abteilung aufliegt und das Öffnen und Schließen des Ventils steuert.

5. Filter nach Anspruch 4, dadurch gekennzeichnet, daß in der Trennwand zwischen der ersten und zweiten Abteilung eine Öffnung vorgesehen ist, die so ausgelegt ist, daß sich die Stange bewegen kann, wobei weiterhin mit Rücksicht auf diese Stange eine elastische Membran an der Wand und dieser Stange vorgesehen ist, welche einen Durchfluß von Wasser durch die Öffnung verhindert.

6. Filter nach Anspruch 1 bis 3, dadurch gekennzeichnet, daß zwei Überlauföffnungen, die jeweils zwischen dem Aquarium und der zweiten Abteilung und zwischen der ersten und der zweiten Abteilung angeordnet sind, auf unterschiedlichen Höhen liegen und insbesondere die erste über der zweiten angeordnet ist.

7. Filter nach Anspruch 1 bis 4, dadurch gekennzeichnet, daß in der ersten Abteilung eine Ergänzungswanne angeordnet ist, die Wasser zum Auffüllen enthält und dazu dient, eine Abnahme der Menge des im Aquarium vorhandenen Wassers zu kompensieren, wobei die Wanne mit einer Einrichtung ausgerüstet ist, um das Niveau des Wassers am Boden der zweiten Abteilung zu messen und die das Auffüllwasser aus dieser Wanne in das Aquarium freigibt.

8. Filter nach den vorhergehenden Ansprüchen, dadurch gekennzeichnet, daß ein Rohr, das die Boden/Seitenwand des Filters und des Aquariums kreuzt, in der zweiten Abteilung unter dem Behälter angeordnet ist auf einer Höhe über dem Schwimmer und dazu dient, die Abgabe von überschüssigem Wasser vom Boden der zweiten Abteilung zu gewährleisten.

9. Filter nach Anspruch 4, dadurch gekennzeichnet, daß der bausteinartige und herausnehmbare Behälter das Filtermaterials aus vier parallelen und horizontalen Platten besteht, die mit entsprechenden Perforationen/Schlitzen versehen sind, wobei diese Platten eine primäre Zone zur Aufnahme von biologisch-aktivem Filtermaterial, eine zweite Zone zur Aufnahme von biologisch-aktivem Filtermaterial und einen dritten Zwischenraum bilden, der dazu dient eine Scheidewand aus mechanisch-aktivem Filtermaterial aufzunehmen, wobei zusätzlich dazu eine geneigte Platte auf einer niedrigen Höhe vorgesehen ist, um Wassertropfen aufzunehmen, die von dem Aufbau darüber herabfallen, und sie zuverlässig zum Boden der zweiten Abteilung (2) zu leiten.

10. Filter nach den vorhergehenden Ansprüchen, dadurch gekennzeichnet, daß eine Einrichtung vorgesehen ist, um den Filter auf der Außenseite des Aquariumbehälters anzuordnen.

11. Filter nach Anspruch 7, dadurch gekennzeichnet, daß die zuvor erwähnte Wanne, die Auffüllwasser enthält, auf der Außenseite des Filters angeordnet ist, wobei diese Wanne mit einer geeigneten Einrichtung ausgestattet ist, um das Niveau des Wassers am Boden der zweiten Abteilung zu messen und eine Einrichtung zu steuern, damit das darin enthaltene Wasser in das Aquarium abgegeben werden kann.

12. Filter nach Anspruch 1 bis 7, dadurch gekennzeichnet, daß die erwähnte Scheidewand aus mechanisch-aktivem Filtermaterial aus dem Zwischenraum in dem erwähnten Behälter mittels eines geeigneten Schlitzes herausziehbar ist, der in der Seitenwand des Behälters ausgebildet ist.

13. Filter für Aquarien nach Anspruch 1, dadurch gekennzeichnet, daß eine dritte Abteilung vorgesehen ist, die mit der zweiten Abteilung über eine Öffnung in Verbindung steht, die zu diesem Zweck im Boden ausgebildet ist, wobei eine Pumpe für die Rezirkulation von Wasser in der dritten Abteilung vorgesehen ist zusätzlich zu der Ausbildung einer Einrichtung zwischen der ersten und zweiten Abteilung, um Wasser von der ersten in die zweite Abteilung zu leiten, wobei diese Einrichtung durch eine Schwimmervorrichtung gesteuert wird, die auf dem Wasserniveau in der zweiten und dritten Abteilung aufliegt.

14. Filter für Aquarien nach Anspruch 12, dadurch gekennzeichnet, daß diese Einrichtung den direkten Zustrom von Wasser von der ersten zur zweiten Abteilung zuläßt und aus einer Öffnung besteht, die in der Trennwand zwischen den Abteilungen angeordnet ist und durch ein Ventil verschlossen wird, das durch die Schwimmervorrichtung betätigt wird.

15. Filter für Aquarien nach Anspruch 12, dadurch gekennzeichnet, daß die Einrichtung für den direkten Zufluß von Wasser aus der ersten in die zweite Abteilung aus einem Siphon besteht, der in einer Abzweigung an ein Ventil angebracht ist, das durch eine Schwimmereinrichtung gesteuert wird, die auf der Höhe der zweiten Abteilung wirkt, wobei der Siphon durch eine Venturi-Einrichtung konstant beaufschlagt wird, die auf der Seite der Pumpenabgabe angeordnet und über eine Zweigleitung mit dem Siphon verbunden ist.

16. Filter für Aquarien nach den vorausgehenden Ansprüchen, dadurch gekennzeichnet, daß eine Einrichtung zum Auffüllen des Wasserniveaus in dem Filter und in der Wanne vorgesehen ist, wobei diese Einrichtung aus einem Siphon oder alternativ aus einem Rohr besteht, welches die dritte Abteilung mit einen Reservoir verbindet, wobei dieser Siphon durch eine Venturi-Einrichtung beaufschlagt gehalten wird, die auf der Pumpenabgabeseite angeordnet und durch ein Ventil gesteuert wird, das durch eine Schwimmereinrichtung beaufschlagt wird, die auf der Höhe der dritten Abteilung wirkt.

17. Filter für Aquarien nach den vorhergehenden Ansprüchen, dadurch gekennzeichnet, daß in der dritten Abteilung eine Zweigleitung vorgesehen ist, die an eine automatische Entleerungseinrichtung für den Wasserwechsel angeschlossen ist.

18. Filter für Aquarien nach den vorhergehenden Ansprüchen, dadurch gekennzeichnet, daß der Boden der zweiten Abteilung geneigt ist, um Verschmutzungsmaterial zu sammeln, wobei ein Blattfilter vorgesehen und zu diesem Zweck an der Verbindungsöffnung zwischen der zweiten und dritten Abteilung angeordnet ist.

19. Filter für Aquarien nach den vorhergehenden Ansprüchen, dadurch gekennzeichnet, daß eine Einrichtung vorgesehen ist, um den Filter auch auf der Außenseite des Behälters anordnen zu können.

20. Filter für Aquarien nach den vorhergehenden Ansprüchen, dadurch gekennzeichnet, daß die Kapazität der Pumpe dem drei- bis sechsfachen Volumen des Behandlungswassers entspricht, wobei das Volumen des Auffüllmaterials dem 3,5-bis 10-fachen des zu behandelnden Volumens entspricht.

## Revendications

1. Filtre du type à percolation pour aquariums, comprenant deux compartiments adjacents (1,2), qui communiquent entre eux au moyen d'un orifice de trop-plein (5), le premier compartiment (1) étant adapté pour communiquer avec l'aquarium par un certain nombre d'ouvertures (3) disposées dans l'une de ses parois, caractérisé en ce que ledit second compartiment (2) contient un matériau filtrant en suspension à partir du fond dudit second compartiment, et qu'il est prévu des moyens formant pompe situés dans ledit premier compartiment (1) pour collecter de l'eau filtrée à partir du fond du second compartiment (2) mentionné précédemment, et que lesdits moyens formant pompe sont adaptés pour renvoyer ladite eau en circulation dans ledit aquarium communiquant.

2. Filtre selon la revendication 1, caractérisé en ce qu'il est prévu, dans ledit second compartiment, un récipient subdivisé en d'autres zones de filtration, dont chacune est entourée par des plates-formes pourvues de passages pour l'eau, chacune desdites zones contenant un matériau filtrant, ledit récipient étant placé à une certaine hauteur au-dessus du fond du compartiment.

3. Filtre selon les revendications précédentes, caractérisé en ce que lesdits moyens pour soutirer l'eau filtrée à partir du fond dudit second compartiment sont constitués par un groupe de pompes situées dans ledit premier compartiment, ledit groupe de pompes entraînant de l'eau présente au niveau du fond du second compartiment et la renvoyant, par l'intermédiaire d'un conduit, dans la cuve de l'aquarium.

4. Filtre selon une ou plusieurs des revendications précédentes, caractérisé en ce qu'il est prévu une soupape, qui règle l'introduction d'eau depuis la cuve de l'aquarium dans ledit premier compartiment, cette soupape étant raccordée à une extrémité d'une tige, à l'autre extrémité de laquelle est raccordé un flotteur qui repose sur le fond du second compartiment et qui commande son ouverture et sa fermeture.

5. Filtre selon la revendication 4, caractérisé en ce qu'il est prévu, dans la paroi de séparation entre lesdits premier et second compartiments, une ouverture conçue de manière à permettre un déplacement de ladite tige et équipée en outre, en rapport avec ladite tige, d'une membrane élastique fixée à ladite paroi et à ladite tige, la membrane entravant le passage de l'eau à partir de ladite ouverture.

6. Filtre selon les revendications 1 à 3, caractérisé en ce que les deux orifices de trop-plein, qui sont disposés respectivement entre l'aquarium et le second compartiment et entre les premier et second compartiments, sont placés à des niveaux différents et, de façon plus précise, le premier est situé à un niveau plus élevé que le second.

7. Filtre selon les revendications 1 à 4, caractérisé en ce qu'il est prévu un bac supplémentaire disposé dans le premier compartiment et contenant de l'eau de remplissage complémentaire et conçu pour compenser les réductions de la quantité d'eau présente dans l'aquarium, le bac étant équipé des moyens de mesure du niveau de l'eau présente dans le fond du second compartiment et qui libèrent l'écoulement d'eau de remplissage complémentaire depuis ledit bac, dans l'aquarium.

8. Filtre selon les revendications précédentes, caractérisé en ce qu'il est prévu une canalisation qui traverse le fond/la paroi latérale du filtre et de l'aquarium, est placé dans le second compartiment au-dessous dudit récipient mentionné précédemment, et qui débouche à un niveau plus élevé que celui des flotteurs mentionnés précédemment et est agencé de manière à garantir la délivrance de toute eau en excès provenant dudit fond du second compartiment.

9. Filtre selon la revendication 4, caractérisé en ce que le récipient modulaire et expansible, mentionné précédemment, est constitué de quatre plates-formes parallèles et horizontales, pourvues de perforations/fentes appropriées, lesdites plates-formes définissant une zone primaire destinée à contenir le matériau filtrant à action biologique, une seconde zone destinée à contenir le matériau filtrant à action biologique et un troisième interstice conçu de manière à loger un septum formé d'un matériau filtrant à action mécanique, et qu'en outre il est prévu une plate-forme inclinée située à un niveau inférieur et conçue de manière à collecter les gouttes d'eau arrivant à partir des niveaux qui sont situés au-dessus d'elle et pour les convoyer de façon fiable jusqu'au fond du compartiment mentionné précédemment.

10. Filtre selon les revendications précédentes et caractérisé en ce qu'il est prévu des moyens pour positionner ledit filtre à l'extérieur de la cuve de l'aquarium.

11. Filtre selon la revendication 7, caractérisé en ce que le bac mentionné précédemment, qui contient de l'eau de remplissage complémentaire, est positionné sur le côté extérieur du filtre, ledit bac étant équipé de moyens appropriés pour gérer le niveau de l'eau présent sur le fond du second compartiment mentionné précédemment et commander des moyens appropriés pour permettre l'envoi, dans l'aquarium, de l'eau qu'il contient.

12. Filtre selon les revendications 1 à 7, caractérisé en ce que le septum mentionné précédemment, formé du matériau filtrant à action mécanique, peut être extrait de l'interstice présent dans le récipient mentionné précédemment, grâce à une fente appropriée ménagée dans la paroi latérale du récipient lui-même.

13. Filtre pour aquarium selon la revendication 1, caractérisé en ce qu'il est prévu un troisième compartiment communiquant avec le second compartiment mentionné précédemment, par l'intermédiaire d'une ouverture ménagée à cet effet dans le fond, une pompe pour la recirculation de l'eau étant prévue dans ledit troisième compartiment en dehors des moyens, prévus entre lesdits premier et second compartiments et conçus pour favoriser l'écoulement direct de l'eau depuis ledit premier compartiment en direction dudit second compartiment, lesdits moyens étant commandés par un dispositif flottant qui travaille au niveau de l'eau présente dans lesdits second et troisième compartiments.

14. Filtre selon la revendication 12, caractérisé en ce que lesdits moyens permettant l'écoulement direct d'eau depuis ledit premier compartiment en direction dudit second compartiment sont constitués par une ouverture ménagée dans la paroi de séparation entre lesdits compartiments et fermée par une soupape activée par ledit dispositif flottant.

15. Filtre pour aquariums selon la revendication 12, caractérisé en ce que lesdits moyens conçus pour favoriser l'écoulement direct de l'eau depuis ledit premier compartiment dans ledit second compartiment sont constitués par un siphon monté en dérivation sur une soupape commandée par un dispositif flottant qui agit sur le niveau dudit second compartiment, ledit siphon étant maintenu en permanence amorcé par un dispositif "venturi" disposé sur la canalisation de refoulement de la pompe et raccordé par l'intermédiaire d'une dérivation audit siphon.

16. Filtre pour aquariums selon les revendications précédentes, caractérisé en ce qu'il est prévu des moyens conçus pour parfaire le remplissage du niveau d'eau dans le filtre et dans le bac, lesdits moyens étant constitués par un siphon ou, sinon, par un tuyau qui raccorde ledit troisième compartiment à un réservoir, ledit siphon étant maintenu amorcé par un dispositif "venturi" monté dans le tuyau de refoulement de la pompe et commandé par une soupape activée par un dispositif flottant qui agit sur le niveau dudit troisième compartiment.

17. Filtre pour aquariums selon les revendications précédentes, caractérisé en ce qu'il est prévu, dans le troisième compartiment mentionné précédemment, une canalisation de dérivation raccordée à un dispositif de déchargement automatique servant à changer l'eau.

18. Filtre pour aquariums selon les revendications précédentes, caractérisé en ce que le plancher du second compartiment mentionné précédemment est incliné de manière à favoriser la collecte de substances polluantes, et qu'il est prévu un filtre en feuilles disposé à cet effet dans l'ouverture de communication entre lesdits second et troisième compartiments.

19. Filtre pour aquariums selon les revendications précédentes, caractérisé en ce qu'il est prévu des moyens conçus pour positionner ledit filtre également à l'extérieur de la cuve.

20. Filtre pour aquariums selon les revendications précédentes, caractérisé en ce que la capacité de la pompe varie de 3 à 6 fois le volume de l'eau de traitement, le volume du matériau de remplissage complémentaire étant compris entre 3,5 et 10 fois le volume à traiter.
